# EUROPÄISCHE PATENTSCHRIFT

(11) **EP 2 057 383 B1**
(45) Veröffentlichungstag und Bekanntmachung des Hinweises auf die Patenterteilung: **24.02.2016**
(21) Anmeldenummer: 07817446.3
(22) Anmeldetag: 25.08.2007
(51) Int. Cl.: F16C 23/10, F16C 23/08, D21G 1/02, B41F 13/20, F16C 19/55, F16C 13/02

(54) **WÄLZLAGEREINHEIT**
ROLLING-ELEMENT BEARING UNIT
UNITÉ PALIER À ROULEMENT

(30) Priorität: 31.08.2006 DE 102006040777
(43) Veröffentlichungstag der Anmeldung: 13.05.2009
(73) Patentinhaber: Schaeffler Technologies AG & Co. KG, 91074 Herzogenaurach (DE)
(72) Erfinder: GREHN, Martin, 97456 Dittelbrunn (DE)
(86) Internationale Anmeldenummer: PCT/DE2007/001520
(87) Internationale Veröffentlichungsnummer: WO 2008/025336

(56) Entgegenhaltungen:
- WO-A-2007/033844
- DE-A1- 3 049 080
- DE-U1- 20 210 228
- US-A- 4 159 152

## Beschreibung

### Gebiet der Erfindung

Die Erfindung betrifft eine Wälzlagereinheit zur Drehlagerung zweier ineinander angeordneter, um separate, unter einem Winkel zueinander stehende Drehachsen drehbarer Bauteile, insbesondere des Walzenkerns und des Walzenmantels einer Breitenstreckwalze für eine Papiermaschine.

### Hintergrund der Erfindung

Mitunter ist es erforderlich, zwei drehbare Bauteile, die ineinander angeordnet sind, separat drehzulagern. Ein Beispiel hierfür ist eine neuartige Breitenstreckwalze für Papiermaschinen. Bei einer solchen Breitenstreckwalze werden zwei Walzen, ein innerer Walzenkern und ein äußerer Walzenmantel, ineinander angeordnet und gegeneinander elastisch gebogen. Die äußere Walze, also der Walzenmantel, ist die eigentliche Arbeitswalze, die auf der Papierbahn abrollt, die innere Walze, der Walzenkern, ist die Stützwalze. Jede Walze wird für sich in Wälzlagern gelagert. Die Mittelpunkte der Wälzlager werden unterschiedlich zwischen 0 und einem maximalen Abstand exzentrisch verstellt. Hierdurch werden die Walzen mehr oder weniger stark elastisch gebogen. Die Lagerung einer solchen breiten Streckwalze erfolgt bisher unter Verwendung zweier separater Standardwälzlager mit entsprechenden Umbauteilen, um einerseits die separate Lagerung der beiden Walzen zu ermöglichen wie auch deren Relativverstellung zueinander. Die Umbauteile sind hierfür speziell anzufertigen, der Teileaufwand ist zwangsläufig groß, die Schmierstoffzuführung ist kompliziert, wie auch diese Konstruktion relativ groß aufbaut und mithin einen hohen Platzbedarf beansprucht.

Die DE 3049080 A1 beschreibt eine Preßwalze, deren Durchbiegung einstellbar ist.

Die DE 20210228 U1 offenbart eine Wälzlageranordnung zur Lagerung eines Zylinders einer Druckmaschine, wobei mindestens ein Lagerring als Exzenter ausgebildet sein kann, und eine laterale Position des Zylinders zu verändern.

Die US 4159152 beschreibt eine Lageranordnung zur Lagerung eines Bauteils.

### Zusammenfassung der Erfindung

Der Erfindung liegt damit das Problem zugrunde, eine Möglichkeit zur einfachen, kompakten Lagerung zweier solcher Bauteile, insbesondere der beiden Walzen einer Breitenstreckwalze, anzugeben.

Zur Lösung dieses Problems ist erfindungsgemäß eine Wälzlagereinheit vorgesehen, umfassend folgende integrierte Elemente:
- ein äußeres Wälzlager zur Drehlagerung des äußeren Bauteils,
- ein die Winkelverstellung des äußeren Wälzlagers ermöglichendes Gelenklager, das das äußere Wälzlager trägt,
- ein winkelverstellbares inneres Wälzlager zur Drehlagerung des inneren Bauteils, sowie
- einen Exzenter, bestehend aus einem inneren und einem äußeren Exzenterring, über welche Exzenterringe die Mittelpunkte der beiden Wälzlager relativ zueinander verstellbar sind,
   wobei entweder die Außenseite des äußeren Exzenterrings und eine Innenseite eines Innenrings des äußeren Wälzlagers zur Bildung des Gelenklagers kugelabschnittsförmig profiliert sind und ineinandergreifen
   oder die Innenseite des äußeren Exzenterrings und die Außenseite des inneren Exzenterrings zur Bildung des Gelenklagers kugelabschnittsförmig profiliert sind und ineinander greifen.

Bei der erfindungsgemäßen Wälzlagereinheit sind drei separate Lager zu einer integrierten Funktions- oder Baueinheit zusammengefasst. Ein äußeres Wälzlager dient zur Drehlagerung des äußeren Bauteils, hier also des Walzenmantels, wobei dieses äußere Wälzlager über ein ihm radial nach innen gesehen nachgeschaltetes Gelenklager winkelverstellbar ist, um die erforderliche Winkelverstellung, die für die elastische Verbiegung der Walze bezogen auf ihre Längsachse erforderlich ist, zu gewährleisten. Weiterhin ist, wiederum radial weiter innenliegend, ein winkelverstellbares inneres Wälzlager vorgesehen, das der Drehlagerung des Innenbauteils, hier also des Walzenkerns dient. Auch dieses Wälzlager ist winkelverstellbar, um auch hier die Winkelanpassung für die elastische Verformung des Walzenkerns bezogen auf seine Längsachse zu ermöglichen. Diese elastische Verformung der beiden Bauteile bzw. Walzenteile wird ermöglicht, indem die Baueinheit einen Exzenter aufweist, bestehend aus einem inneren und einem äußeren Exzenterring. Dieser Exzenter ist derart in die Wälzlagereinheit integriert, dass die beiden Mittelpunkte der beiden Wälzlager, also des äußeren und des inneren Wälzlagers, relativ zueinander verstellt werden können. Durch eine entsprechende Verstellung der Exzenterringe kann folglich die Durchbiegung eingestellt werden, wie auch die Lage der Durchbiegung im Raum.

Die erfindungsgemäße Wälzlagereinheit ist ein kompaktes Element, das sämtliche erforderlichen Funktionen, nämliche Drehlagerung, Winkelverstellung sowie Exzenterverstellung, in sich vereint. Es sind keine weiteren Bauteile mehr erforderlich, um die zu lagernden Bauteile, also beispielsweise die beiden Walzen, in der geforderten Weise zu lagern. Eine Schmierung der Wälzlager ist, nachdem diese ineinander angeordnet sind, ohne weiteres möglich. Weiterhin baut die erfindungsgemäße Wälzlagereinheit relativ klein, weshalb der benötigte Platzbedarf ebenfalls relativ gering ist.

Denkbar sind zwei grundsätzliche Ausgestaltungen der erfindungsgemäßen Wälzlagereinheit, nämlich eine 5-Ring-Lagereinheit und eine 4-Ring-Lagereinheit.

Bei der 5-Ring-Lagereinheit ist die Außenseite des äußeren Exzenterrings und die Innenseite eines Innenrings des äußeren Wälzlagers zur Bildung des Gelenklagers kugelabschnittsförmig profiliert, sie greifen ineinander. Diese Lagereinheit besteht insgesamt aus fünf Ringen, nämlich dem Außenring und dem Innenring des äußeren Wälzlagers, dem äußeren Exzenterring und dem inneren Exzenterring, der gleichzeitig den Außenring bzw. die Lauffläche für das innere Wälzlager bildet, und dem Innenring des inneren Wälzlagers. Bei dieser Erfindungsausgestaltung ist die Innenseite des Innenrings des äußeren Wälzlagers und die Außenseite des äußeren Exzenterrings kugelabschnittsförmig profiliert, die Innenring-Innenseite dabei hohlkugelartig, die Außenseite vollkugelartig, beide greifen ineinander und bilden das Gelenklager, das eine Verkippung des äußeren Wälzlagers relativ zum inneren Wälzlager um eine Achse senkrecht zur Drehachse ermöglicht. Selbstverständlich wäre es auch denkbar, die Form des Gelenklagers umgekehrt zu gestalten, also die Innenseite des Innenrings des äußeren Wälzlagers als Vollkugelprofil und die Außenseite des äußeren Exzenterrings als Hohlkugelprofil.

Dem gegenüber besteht die 4-Ring-Lagereinheit aus dem Außenring des äußeren Wälzlagers, aus dem äußeren Exzenterring, der gleichzeitig den Innenring bzw. die Lauffläche für die Wälzkörper des äußeren Wälzlagers bildet, dem inneren Exzenterring, der auch hier den Außenring bzw. die Lauffläche des inneren Wälzlagers bildet, und dem Innenring des inneren Wälzlagers. Das Gelenklager ist bei dieser Alternative zwischen den beiden Exzenterringen ausgebildet. Hierzu ist die Innenseite des äußeren Exzenterrings und die Außenseite des inneren Exzenterrings zur Bildung des Gelenklagers kugelabschnittsförmig profiliert, sie greifen ineinander. Beispielsweise kann auch hier die Innenfläche des äußeren Exzenterrings hohlkugelartig profiliert sein, während die Außenseite des inneren Exzenterrings als Vollkugel profiliert ist. Hier entfällt also der separate Innenring des äußeren Wälzlagers, seine Funktion übernimmt der äußere Exzenterring. Während diese Wälzlagereinheit also mit nur 4 Ringen auskommt, zeichnet sich die 5-Ring-Wälzlagereinheit dadurch aus, dass sie aus zwei separat montierbaren Einheiten hergestellt werden kann. So kann bei dieser Ausführung das innere Wälzlager mit dem inneren Exzenterring als ein Bauteil und das äußere Wälzlager mit dem Gelenklager, also enthaltend den äußeren Exzenterring, als zweites Bauteil vormontiert werden. Anschließend sind lediglich die beiden Exzenterringe ineinander zu setzen.

Das äußere Wälzlager ist zweckmäßigerweise ein für hohe Drehgeschwindigkeiten ausgelegtes Wälzlager, insbesondere ein zweireihiges Zylinderrollenlager. Die Drehgeschwindigkeit dieses Wälzlagers ist relativ hoch. Denn wie beschrieben ist am äußeren Wälzlager der Walzenmantel befestigt, der unmittelbar auf der Papierbahn abrollt, die unter ihm durchgezogen wird und über die die gesamte Walzenanordnung gedreht wird. Infolge der relativ hohen Fördergeschwindigkeit des Papiers in Verbindung mit dem Lagerdurchmesser ergibt sich eine beachtliche Drehgeschwindigkeit, bezüglich welcher das Lager ausgelegt werden muss. Hier bietet sich ein zweireihiges Zylinderrollenlager an, das einerseits für derart hohe Drehgeschwindigkeiten ausgelegt ist, andererseits auch ausreichend belastbar ist. Anstelle eines zweireihigen Zylinderrollenlagers kann aber grundsätzlich jede andere Lagerbauart, z. B. einreihige Zylinderrollenlager oder ein- oder mehrreihige Kugellager, als äußeres Wälzlager eingesetzt werden. Das als äußeres Wälzlager verwendete Lager bestimmt im Übrigen, ob die Lagereinheit als Festlager (dann mit Bunden am äußeren Wälzlager) oder als Loslager (ohne Bunde, deshalb axiale Beweglichkeit der Wälzkörper) eingesetzt werden kann.

Das innere Wälzlager ist zweckmäßigerweise als Pendelrollenlager ausgeführt, das von Haus aus winkelverstellbar ist. Bei einem solchen Pendelrollenlager weist der Außenring eine hohlkugelförmige Profilierung auf, während am Innenring zwei unter einem Winkel zueinander stehende, ebenfalls leicht hohlkugelförmig profilierte Laufflächen vorgesehen sind. Die beiden Wälzkörperreihen stehen also unter einem Winkel zueinander.

Infolge der hohlkugelförmigen Profilierung der äußeren Lauffläche ist es nun möglich, den Innenring samt dem Wälzkörpern relativ zum Außenring zu verstellen.

Dem inneren Wälzlager kommt z. B. bei Verwendung zur Lagerung einer Breitenstreckwalze ferner eine Schiebefunktion zu. Beim Verbiegen der Walze muss hier ein Längenausgleich möglich sein. Dafür weist die innere Lagerbohrung einen Schiebesitz auf. Ferner ist eine Nut zur Aufnahme einer an der Welle angeordneten Passfeder vorzusehen, um die Drehbewegung bzw. Mitnahme zu ermöglichen.

### Kurze Beschreibung der Zeichnungen

Weitere Vorteile und Einzelheiten der Erfindung ergeben sich aus den im Folgenden beschriebenen Ausführungsbeispielen sowie anhand der Zeichnungen. Dabei zeigen:
- Fig. 1: eine Seitenansicht einer erfindungsgemäßen Wälzlagereinheit als 5-Ring-Lagereinheit,
- Fig. 2: eine Schnittansicht durch die Wälzlagereinheit aus Fig. 1 entlang der Linie II-II,
- Fig. 3: eine Schnittansicht durch die Wälzlagereinheit aus Fig. 1 entlang der Linie III-III,
- Fig. 4: eine Seitenansicht einer erfindungsgemäßen 4-Ring-Wälzlagereinheit,
- Fig. 5: eine Schnittansicht durch die Wälzlagereinheit aus Fig. 4 entlang der Linie V-V,
- Fig. 6: eine Prinzipdarstellung der Montagesituation zweiter Wälzlagereinheiten an einer Breitensteckwalze, wobei die Wälzlagereinheiten unverstellt sind, und
- Fig. 7: die Anordnung nach Fig. 6 mit verstellten Wälzlagereinheiten.

### Detaillierte Beschreibung der Zeichnungen

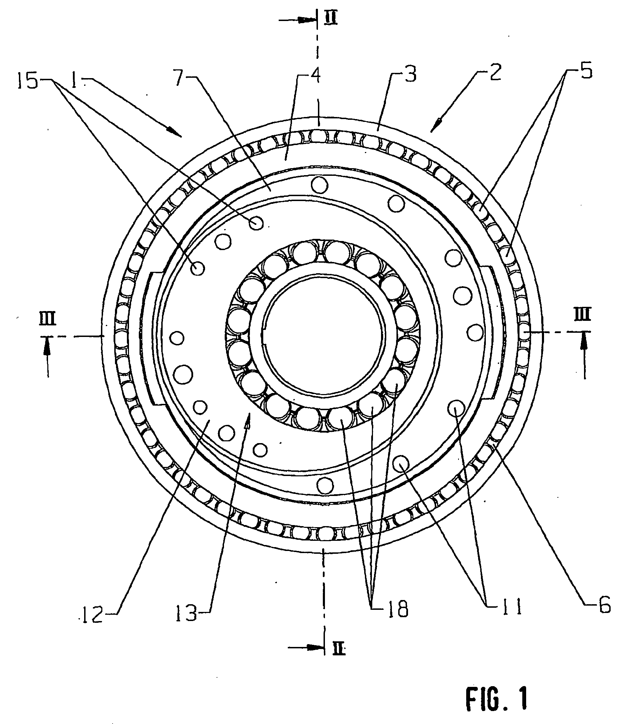

Fig. 1 zeigt eine erfindungsgemäße Wälzlagereinheit 1 einer ersten Ausführungsform, umfassend ein äußeres Wälzlager 2, bestehend aus einem Außenring 3, einem Innenring 4 sowie mehreren auf den Laufflächen dieser beiden Ringe laufenden Wälzkörpern 5, die in einem Käfig 6 gehaltert sind, wobei im gezeigten Ausführungsbeispiel zwei Wälzkörperreihen vorgesehen sind, es handelt sich hier also um ein doppelreihiges Zylinderrollenlager.

Radial gesehen nach innen folgt dem Innenring 4 ein äußerer Exzenterring 7. Der Innenring 4 und der äußere Exzenterring 7 bilden zusammen ein Gelenklager 8. Hierzu ist die Innenfläche 9 des Innenrings 4 hohlkugelförmig profiliert, entsprechend ist die Außenfläche 10 des äußeren Exzenterrings 7 vollkugelförmig profiliert, weist also ein komplementäres Außenprofil auf. Beide greifen ineinander, so dass folglich das äußere Wälzlager 2 relativ zum äußeren Exzenterring 7 und den in ihm eingebauten Elementen um eine Achse senkrecht zur Drehachse verkippt werden kann.

Am äußeren Exzenterring 7 sind eine Reihe von Befestigungsbohrungen 11 vorgesehen, mittels welcher der äußere Exzenterring an einem Gegenflansch, der wiederum an einem Maschinengestell drehgelagert ist, anzuflanschen ist, wenn die Wälzlagereinheit montiert wird.

Dem äußeren Exzenterring 7 folgt ein innerer Exzenterring 12, der im gezeigten Ausführungsbeispiel etwas schmäler als der äußere Exzenterring ist. Der äußere Exzenterring 12 bildet gleichzeitig den Außenring für ein inneres Wälzlager 13, das hier als Pendelrollenlager ausgeführt ist. Hierzu ist die Innenseite 14 des inneren Exzenterrings 12, der ebenfalls über eine Reihe von Befestigungsbohrungen 15 verfügt, über die er ebenfalls an einem anderen Gegenflansch eines Maschinengestells angeflanscht werden kann, hohlkugelförmig profiliert. Das innere Wälzlager 13 umfasst einen Innenring 16, der zwei unter einem Winkel zueinander stehende Laufflächen 17 aufweist, auf denen die Wälzkörper 18, die dann zwangsläufig unter einem Winkel zueinander stehen, laufen. Infolge der hohlkugelförmigen Profilierung der Innenwand 14 des inneren Exzenterrings ist, wie bei Pendelrollenlagern bekannt, eine Winkelverstellung des Innenrings relativ zum Außenring, hier also dem inneren Exzenterring 12, möglich.

Bei dieser 5-Ring-Ausführung der erfindungsgemäßen Wälzlagereinheit besteht die Möglichkeit, diese zunächst in Form zweier separater Baugruppen vorzufertigen. Als eine Baugruppe wird das äußere Wälzlager samt äußerem Exzenterring gefertigt, als zweite Baugruppe das innere Wälzlager mit dem inneren Exzenterring. Die beiden Exzenterringe 7, 12 sind an ihren einander gegenüberliegenden Flächen zylindrisch ausgeführt, so dass die beiden Baugruppen ineinander gesetzt werden können.

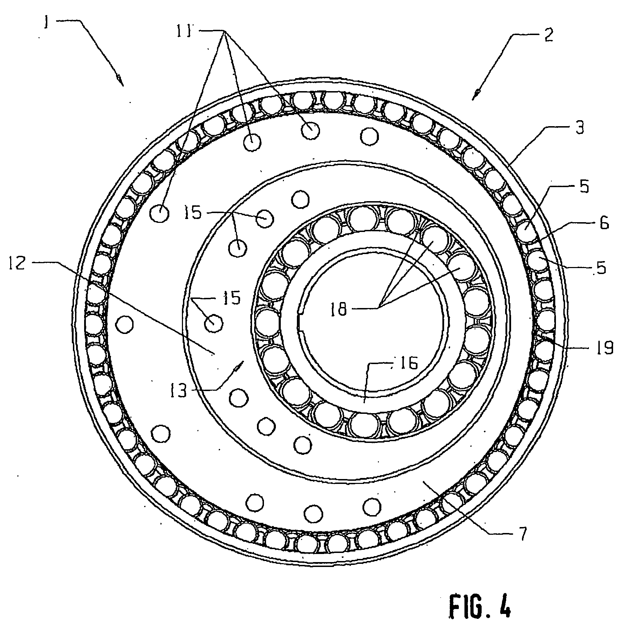

Eine weitere erfindungsgemäße Ausführungsform einer Wälzlagereinheit 1 zeigt Fig. 4, wobei hier bei gleichen Bauteilen die gleichen Bezugszeichen verwendet werden. Auch diese zeigt ein äußeres Wälzlager 2 mit einem Außenring 3 und mehreren in einem Käfig 6 geführten Wälzkörpern 5. Hier ist jedoch kein separater Innenring vorgesehen, vielmehr wird der Innenring bzw. die gegenüberliegende Lauffläche für die Wälzkörper 5 vom äußeren Exzenterring 7 bzw. dessen Außenfläche 19 gebildet. Die beiden Wälzkörperreihen laufen also auf der Außenfläche 19 des äußeren Exzenterrings 7 ab.

Dieser äußere Exzenterring 7 weist ebenfalls die mehreren Befestigungsbohrungen 11 auf, über die er an einem Gegenlagerflansch, der wiederum drehbar an einem Maschinengestell, in dem beispielsweise die Breitenstreckwalze gehaltert ist, drehgelagert ist, befestigt wird.

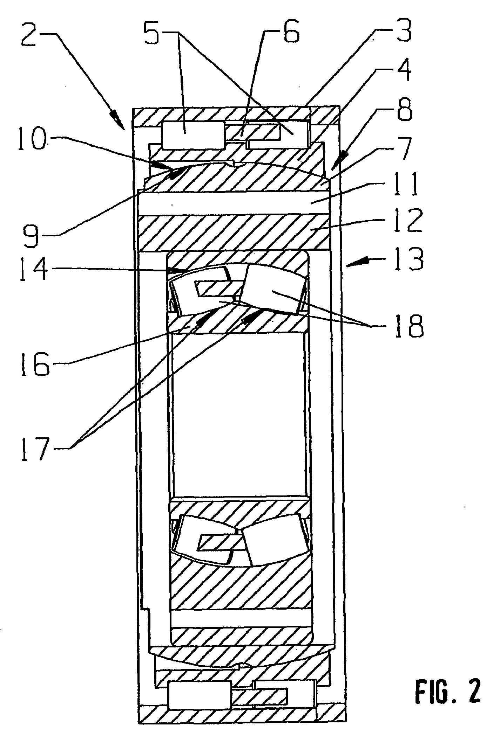

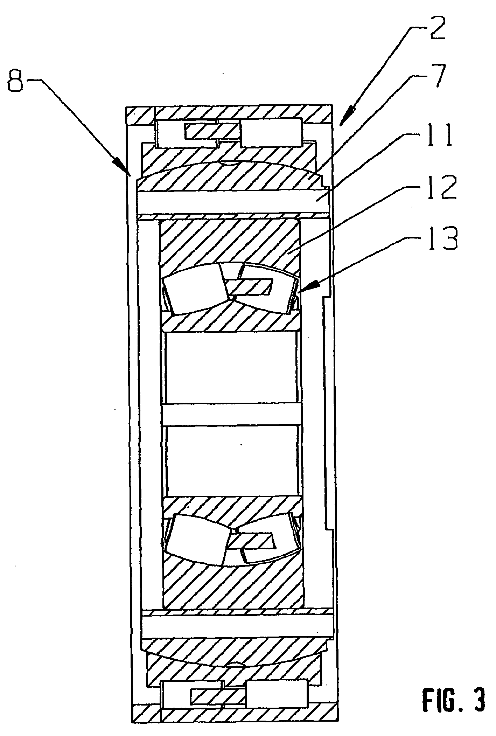

Dem äußeren Exzenterring 7 folgt auch hier der innere Exzenterring 12. Anders als bei der Ausgestaltung nach Figuren 1-3, bei denen die aneinander gegenüberliegenden Flächen der beiden Exzenterringe 7, 12 zylindrisch sind, bilden die beiden Exzenterringe 7, 12 bei dieser Ausführungsform das Gelenklager 8. Hierzu ist die Innenseite 20 des äußeren Exzenterrings 7 hohlkugelförmig profiliert, während die Außenfläche 21 des inneren Erzenterrings 12 vollkugelförmig profiliert ist. Beide greifen ineinander und ermöglichen so die Ausbildung eines Gelenklagers 8, das eine Winkelverstellung des äußeren Wälzlagers 2 relativ zum inneren Wälzlager 13 ermöglicht. Wenngleich hier der äußere Exzenterring 7 relativ zum inneren Exzenterring 12 winkelverstellt wird, sind diese nach wie vor relativ zueinander exzentrisch verstellbar, so dass bei Verwendung mit einer Breitenstreckwalze die Drehachsenverstellung ohne weiteres möglich ist. Auch der Innenring 12 weist hier die mehreren Bohrungen 15 zur Befestigung an einem Gegenflansch auf, welcher Gegenflansch wiederum wie beschrieben an einem Maschinengestell, jedoch separat zum ersten Gegenflansch, drehgelagert ist.

Wie auch bei der Ausführungsform nach den Figuren 1-3 folgt dem inneren Exzenterring 12 das innere Wälzlager 13, wobei der innere Exzenterring den Außenring bzw. die äußere Lauffläche für die Wälzkörper 18 des als Pendelrollenlager ausgeführten inneren Wälzlagers 13 bildet. Auch hier ist die Innenfläche 14 des inneren Exzenterrings hohlkugelförmig profiliert, in entsprechender Weise sind am Innenring 16 die beiden unter einem Winkel zueinander stehenden Laufflächen 17 für die Wälzkörper 18 vorgesehen.

Ersichtlich bauen beide Wälzlagereinheiten sehr kompakt und benötigen nur sehr geringen Platz. Die Winkeleinstellbarkeit beider Wälzlager, also des äußeren Wälzlagers 2 und des inneren Wälzlagers 13, ist unabhängig voneinander gegeben. Auch ist eine stufenlose Einstellbarkeit der Exzentrizität zwischen dem äußeren und dem inneren Wälzlager 2, 13 über die beiden frei einstellbaren Exzenterringe möglich. Mit ihren entsprechenden Bohrungsbildern ermöglichen diese ferner eine einfache Montage der Wälzlagereinheit, wie beschrieben werden beide an entsprechend drehbar gelagerten Gegenflanschen angeflanscht. Ferner ist auch eine einfache, getrennte Schmierung der beiden Wälzlager möglich.

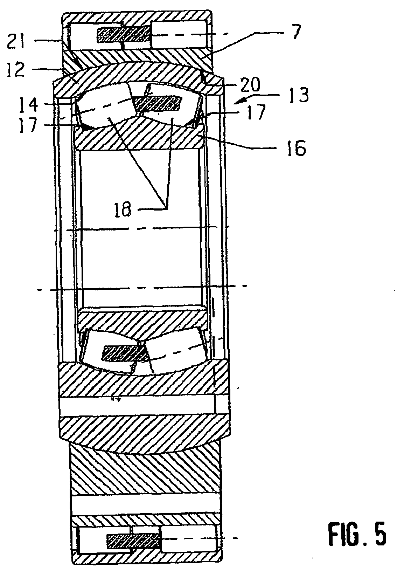

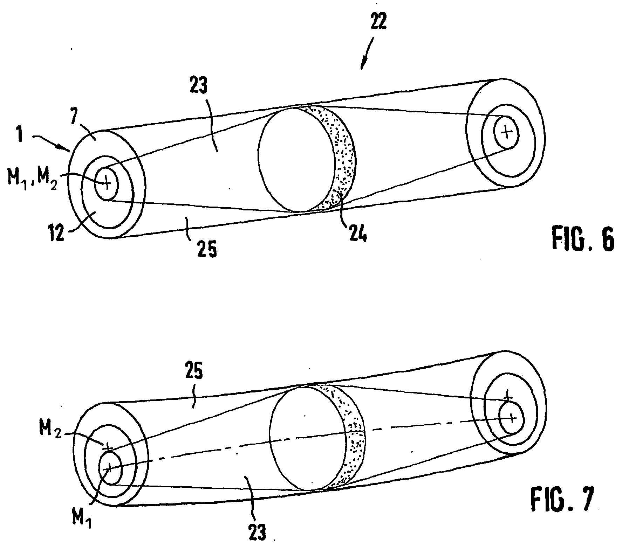

Die Fig. 6 und 7 zeigen ein Anwendungsbeispiel für erfindungsgemäße Wälzlagereinheiten, unabhängig davon, ob es sich nun um eine 5-Ring-Ausführung gemäß den Fig. 1-3 oder um eine 4-Ring-Ausführung gemäß den Fig. 4, 5 handelt. Die Fig. 6, 7 sind lediglich Prinzipdarstellungen, die das grundsätzliche Funktionsprinzip erläutern sollen.

Gezeigt ist eine Breitenstreckwalze 22, bestehend aus einem inneren Walzenkern 23, der hier in Form zweier auseinander laufender Kegelstümpfe realisiert ist. Dieser Walzenkern 23 ist biegsam und besteht z. B. aus faserverstärktem Kunststoff. Er ist in der Mitte über eine Klebeverbindung 24 mit dem Walzenmantel 25, der ebenfalls z. B. aus faserverstärktem Kunststoff besteht, verklebt, mithin also fest verbunden.

Die beiden Enden des inneren Walzenkerns sind im Innenring 16 des inneren Wälzlagers der Wälzlagereinheit 1 aufgenommen, das heißt, der Walzenkern 23 ist über das innere Wälzlager drehgelagert. Der äußere Walzenmantel 25 ist am Außenring 3 des äußeren Wälzlagers befestigt, ist also über das äußere Wälzlager drehgelagert. In den Fig. 6, 7 sind die einzelnen Wälzlager nicht im Detail dargestellt, sondern lediglich der äußere Exzenterring 7 und der innere Exzenterring 12, die für die Beschreibung der Biegefunktion wesentlich sind.

Wie beschrieben sind die beiden Exzenterringe 7, 12 an jeweils separaten Gegenflanschen angeflanscht, das heißt, die einander gegenüberliegenden Wälzlagereinheiten werden über die beiden Exzenterringe relativ zu einem nicht näher gezeigten Maschinengestell festgelegt. Die beiden Gegenflansche selbst sind wiederum in entsprechenden Wälzlagern am Maschinengestell drehgelagert, was erforderlich ist, um die beiden Exzenterringe 7, 12 relativ zueinander verstellen zu können. Dabei trägt im Betrieb der äußere Exzenterring die Walzenkraft.

Fig. 6 zeigt den Grundzustand, in dem die beiden Exzenterringe 7, 12 so positioniert sind, dass die beiden Mittelpunkte M1, M2 der beiden Wälzlager 2, 13 ineinander liegen, mithin also die beiden Drehachsen des Walzenkerns 23 und des Walzenmantels 25 ineinander fallen.

Wird nun der innere Exzenterring im gezeigten Beispiel um maximal 180° aus der Stellung gemäß Fig. 6 in die Stellung gemäß Fig. 7 verdreht, so fallen die beiden Mittelpunkte auseinander. Während der Mittelpunkt M2 des äußeren Wälzlagers in der ursprünglichen Position verbleibt, bewegt sich der Mittelpunkt M1 infolge der Exzenterverstellung im gezeigten Ausführungsbeispiel nach unten. Dies führt dazu, dass der Walzenkern 23, der im inneren Wälzlager 13 gelagert ist, mitgenommen wird. Wie beschrieben ist aber der Walzenkern 23 über die Klebeverbindung 24 mit dem Walzenmantel 25 verbunden. Dies führt dazu, dass - nachdem der äußere Exzenterring 7, der das äußere Wälzlager 2, das den Walzenmantel 25 trägt, lagefest mit dem Maschinengestell verbunden ist - der Walzenmantel 25 zwangsläufig verbogen wird, wie in Fig. 7 dargestellt ist. Der äußere Walzenmantel 25 stellt einen Widerstand dar, was dazu führt, dass letztlich auch der Walzenkern 23 etwas verbogen wird, jedoch biegt sich der Walzenkern 23 in die entgegengesetzte Richtung wie der Walzenmantel 25. Durch eine Verdrehung des inneren Exzenterrings aus der Mittenstellung um 180° kann die maximale Walzenbiegung eingestellt werden.

Soll nun die relative Lage der Biegung, wie sie durch Verstellung des inneren Exzenterrings erreicht wurde, im Raum verändert werden, geschieht dies durch Verdrehen des äußeren Exzenterrings 7. Dieser kann in eine beliebige Position gebracht werden, wobei - nachdem stets der innere Exzenterring samt innerem Wälzlager mitgenommen wird - die eingestellte Walzenbiegung bzw. der Biegegrad erhalten bleibt, lediglich die Raumlage verändert sich.

In der Einbausituation liegt die gebogene Breitenstreckwalze 22 auf der Papierbahn auf, die unter ihr durchgezogen wird, worüber die Walzenrotation erfolgt, die Breitenstreckwalze 22 wird also selbst nicht aktiv angetrieben. Durch die gekrümmte Walzenform wird die Papierbahn aufgrund nach außen wirkendem Geschwindigkeitsvektor in der Breite gestreckt, Falten werden geglättet. Bei der Breitenstreckwalze 22 der beschriebenen Art besteht nun, bedingt durch die Integration der beiden separaten Walzen in Form des Walzenkerns 23 und des Walzenmantels 25 und deren Herstellung aus biegsamem Werkstoff, beispielsweise Kohlefaser, die Möglichkeit, den Biegegrad der Walze beliebig zwischen Null und einem Maximum einstellen zu können. Die erfindungsgemäße Wälzlagereinheit bietet nun die Möglichkeit, sowohl den drehenden Walzenmantel 25 als auch den drehenden Walzenkern in einer gemeinsamen Baueinheit lagern zu können, bei gleichzeitiger Möglichkeit einer entgegengesetzten Verkippung der beiden separaten Lagerungen (des äußeren Wälzlagers 2 und des inneren Wälzlagers 13), wie auch der gegebenen Einstellmöglichkeit bezüglich der Walzenbiegung und der räumlichen Biegungslage über die beiden Exzenterringe.

### Bezugszeichenliste

- 1: Wälzlagereinheit
- 2: äußeres Wälzlager
- 3: Außenring
- 4: Innenring
- 5: Wälzlagerkörper
- 6: Käfig
- 7: Exzenterring
- 8: Gelenklager
- 9: Innenfläche des Innenrings
- 10: Außenfläche des äußeren Exzenterrings
- 11: Befestigungsbohrungen
- 12: Exzenterring
- 13: inneres Wälzlager
- 14: Innenseite des inneren Exzenterrings
- 15: Befestigungsbohrungen
- 16: Innenring
- 17: Laufflächen
- 18: Wälzkörper
- 19: Außenfläche
- 20: Innenseite des äußeren Exzenterrings
- 21: Außenfläche des inneren Exzenterrings
- 22: Breitenstreckwalze
- 23: innerer Walzenkern
- 24: Klebeverbindung
- 25: Walzenmantel

- M1: Mittelpunkt
- M2: Mittelpunkt

## Patentansprüche

1. Wälzlagereinheit zur Drehlagerung zweier ineinander angeordneter, um separate, unter einem Winkel zueinander stehende Drehachsen drehbarer Bauteile, insbesondere des Walzenkerns und des Walzenmantels einer Breitenstreckwalze für eine Papiermaschine, umfassend:
- ein äußeres Wälzlager (2) zur Drehlagerung des äußeren Bauteils (25),
- ein die Winkelverstellung des äußeren Wälzlagers (2) ermöglichendes Gelenklager (8), das das äußere Wälzlager (2) trägt,
- ein winkelverstellbares inneres Wälzlager (13) zur Drehlagerung des inneren Bauteils (23), sowie
- einen Exzenter bestehend aus einem inneren und einem äußeren Exzenterring (7, 12), über welche Exzenterringe (7, 12) die Mittelpunkte (M₁, M₂) der beiden Wälzlager (2, 13) relativ zueinander verstellbar sind,
wobei entweder die Außenseite (10) des äußeren Exzenterrings (7) und die Innenseite (9) eines Innenrings (4) des äußeren Wälzlagers (2) zur Bildung des Gelenklagers (8) kugelabschnittsförmig profiliert sind und ineinander greifen oder die Innenseite (20) des äußeren Exzenterrings (7) und die Außenseite (21) des inneren Exzenterrings (12) zur Bildung des Gelenklagers (8) kugelabschnittsförmig profiliert sind und ineinander greifen.

2. Wälzlagereinheit nach einem der vorangehenden Ansprüche,
**dadurch gekennzeichnet, dass** das äußere Wälzlager (2) ein Wälzlager für hohe Drehgeschwindigkeiten
ist.

3. Wälzlagereinheit nach Anspruch 2, **dadurch gekennzeichnet, dass** das äußere Wälzlager (2) ein Wälzlager für hohe Drehgeschwindigkeiten in Form eines zweireihigen Zylinderrollenlagers ist.

4. Wälzlagereinheit nach einem der vorangehenden Ansprüche, **dadurch gekennzeichnet, dass** das innere Wälzlager (13) ein Pendelrollenlager ist.

## Claims

1. Rolling-element bearing unit for the rotary mounting of two components, in particular the roll core and the roll casing of a width-stretching roll for a paper machine, which are arranged one in the other and are rotatable about separate axes of rotation standing at a angle to one another, comprising:
- an outer rolling-element bearing (2) for the rotary mounting of the outer component (25),
- a pivot bearing (8) which allows the angular adjustment of the outer rolling-element bearing (2) and which carries the outer rolling-element bearing (2),
- an angularly adjustable inner rolling-element bearing (13) for the rotary mounting of the inner component (23), and
- an eccentric, consisting of an inner and of an outer eccentric ring (7, 12), via which eccentric rings (7, 12) the center points (M₁, M₂) of the two rolling-element bearings (2, 13) can be adjusted in relation to one another,
wherein either the outside (10) of the outer eccentric ring (7) and the inside (9) of an inner ring (4) of the outer rolling-element bearing (2) are profiled in the form of a spherical segment so as to form the pivot bearing (8) and engage one in the other,
or the inside (20) of the outer eccentric ring (7) and the outside (21) of the inner eccentric ring (12) are profiled in the form of a spherical segment so as to form the pivot bearing (8) and engage one in the other.

2. Rolling-element bearing unit according to one of the preceding claims, **characterized in that** the outer rolling-element bearing (2) is a rolling-element bearing for high rotational speeds.

3. Rolling-element bearing unit according to Claim 2, **characterized in that** the outer rolling-element bearing (2) is a rolling-element bearing for high rotational speeds in the form of a two-row cylindrical roller bearing.

4. Rolling-element bearing unit according to one of the preceding claims, **characterized in that** the inner rolling-element bearing (13) is a self-aligning roller bearing.

## Revendications

1. Unité de palier à roulement pour le support sur palier pivotant de deux composants disposés l'un dans l'autre, pouvant tourner autour d'axes de rotation séparés orientés suivant un certain angle l'un par rapport à l'autre, en particulier du mandrin de rouleau et de l'enveloppe de rouleau d'un rouleau d'étirage en largeur pour une machine à papier, comprenant :
- un palier à roulement extérieur (2) pour le support sur palier du composant extérieur (25),
- un palier à rotule (8) permettant le réglage angulaire du palier à roulement extérieur (2), qui porte le palier à roulement extérieur (2),
- un palier à roulement intérieur (13) à réglage angulaire pour le support sur palier rotatif du composant intérieur (23) et
- un excentrique constitué d'une bague excentrique intérieure et d'une bague excentrique extérieure (7, 12), par le biais desquelles bagues excentriques (7,12) les centres (M₁, M₂) des deux paliers à roulement (2, 13) peuvent être déplacés l'un rapport à l'autre,
soit le côté extérieur (10) de la bague excentrique extérieure (7) et le côté intérieur (9) d'une bague intérieure (4) du palier à roulement extérieur (2) étant profilés en forme de section de sphère pour former le palier à rotule (8) et s'engageant l'un dans l'autre, soit le côté intérieur (20) de la bague excentrique extérieure (7) et le côté extérieur (21) de la bague excentrique intérieure (12) étant profilés en forme de section de sphère pour former le palier à rotule (8) et s'engageant l'un dans l'autre.

2. Unité de palier à roulement selon l'une quelconque des revendications précédentes, **caractérisée en ce que** le palier à roulement extérieur (2) est un palier à roulement pour grandes vitesses de rotation.

3. Unité de palier à roulement selon la revendication 2, **caractérisée en ce que** le palier à roulement extérieur (2) est un palier à roulement pour grandes vitesse de rotation sous la forme d'un palier à rouleaux cylindriques à deux rangées.

4. Unité de palier à roulement selon l'une quelconque des revendications précédentes, **caractérisée en ce que** le palier à roulement intérieur (13) est un palier à roulement à rouleaux articulés.
